# EUROPÄISCHE PATENTSCHRIFT

(11) **EP 0 685 295 B1**
(45) Veröffentlichungstag und Bekanntmachung des Hinweises auf die Patenterteilung: **31.03.1999**
(21) Anmeldenummer: 95107314.7
(22) Anmeldetag: 15.05.1995
(51) Int. Cl.: B23P 19/00, B21J 15/32, B42C 7/00

(54) **Montageanlage, insbesondere Nietanlage für Mechaniken an Ordnern für Briefe, Akten oder dergleichen**
Assembling installation in particular riveting installation for mechanism in binders for letters, files or similar
Installation d'assemblage, en particulier installation rivetage pour mécanismes des classeurs pour lettres, dossiers ou similaires

(30) Priorität: 21.05.1994 DE 9408472 U
(43) Veröffentlichungstag der Anmeldung: 06.12.1995
(73) Patentinhaber: CONSTANTIN HANG GmbH MASCHINENFABRIK, D-73037 Göppingen (DE)
(72) Erfinder: Kissling, Walter, D-73066 Holzhausen (DE)
(74) Vertreter: KOHLER SCHMID + PARTNER

(56) Entgegenhaltungen:
- EP-A- 0 511 751
- DE-A- 2 753 123
- DE-A- 4 216 755
- FR-A- 2 471 819
- US-A- 3 766 626
- US-A- 4 722 628

## Beschreibung

Es sind bereits Montageanlagen, insbesondere Nietanlagen, für mit mindestens einer Befestigungsöffnung versehene Mechaniken an Ordnern, für Briefe, Akten od. dgl. bekannt, bei welchen die Mechaniken mittels einer Vorschubeinrichtung und einer Positioniereinrichtung der Montagestelle Zugeführt werden. Dabei werden die Mechaniken gegen einen Anschlag gefahren und dort mittels Magnetkraft in der Montagelage festgehalten. Der Konstruktionsaufwand ist dabei verhältnismäßig groß, so daß auch die Herstellungskosten hoch sind. Außerdem entsteht ein hoher Umrüstaufwand beim Einstellen der Anschläge entsprechend der Mechanikgrößen. Da es sich bei den Mechaniken um Massenartikel handelt, können relativ große Toleranzen hinsichtlich der Lage der Befestigungsöffnungen auftreten. Infolgedessen ergeben sich bei der Anlage der Mechanik am Anschlag Verschiebungen der Befestigungsöffnungen gegenüber der Montagestelle, so daß unter Umständen ein fortwährendes Nachstellen der Abstände erforderlich ist.

Aus der DE-A-2753123 ist es bereits bekannt, einen axial in die Befestigungsöffnung der Mechanik einfügbaren konischen Stift vorzusehen, wodurch sich eine bessere Positionierung auch bei größeren Toleranzen der Mechanik ergibt. Selbst wenn der Stift am Rande der Öffnung in diese einfährt wird die Mechanik durch seine Konizität in die richtige Montagelage gebracht. Dabei erfolgt diese Positionierung in der jeweiligen Endstellung, wobei sich ein gewisser Zeitverlust beim Verschieben der Mechanik in die richtige Lage durch den Stift ergibt.

Aufgabe der vorliegenden Erfindung ist es, eine Feinpositionierung der Mechanik ohne jeden Zeitverlust zu erreichen. Dies wird erfindungsgemäß dadurch erreicht, daß der konische Stift in einer in und gegen die Vorschubrichtung von einer Positionierlage in einer Montagelage längs verschiebbaren Hubvorrichtung angeordnet ist. Infolgedessen läuft die Positioniervorrichtung parallel zur Transportvorrichtung und positioniert bereits in diesem Bewegungsabschnitt das Werkstück, so daß es in der richtigen Lage an der Montagestelle ankommt. Anschließend wird dann der konische Stift mit der Hubvorrichtung wiederum entgegengesetzt verschoben, um das nächste Werkstück in die entsprechende Lage zu bringen.

In eine Grobpositionierlage werden die Mechaniken vorzugsweise mittels einer Lichtschranke durch die Vorschubeinrichtung gebracht. Es ist aber auch ohne weiteres möglich, die Grobpositionierlage oder die Positionierlage sozusagen von Hand anzufahren.

Grundsätzlich können selbstverständlich Mechaniken mit nur einer Befestigungsöffnung in dieser Art montiert werden, wobei die Querlage durch andere Hilfsmittel erreicht wird. Üblicherweise werden jedoch Mechaniken mit mindestens zwei Befestigungsöffnungen verwendet und in diesem Fall sind zwei konische Stifte vorgesehen, welche vorzugsweise, um Mechaniken aller Größen zu erfassen, quer zur Vorschubrichtung gegeneinander einstellbar verschiebbar sind.

Die Zeichnung zeigt ein Ausführungsbeispiel der Erfindung. Es stellen dar:
- Fig. 1: die schematischen Seitenansicht einer Nietanlage,
- Fig. 2: eine teilweise geschnittene Vorderansicht.

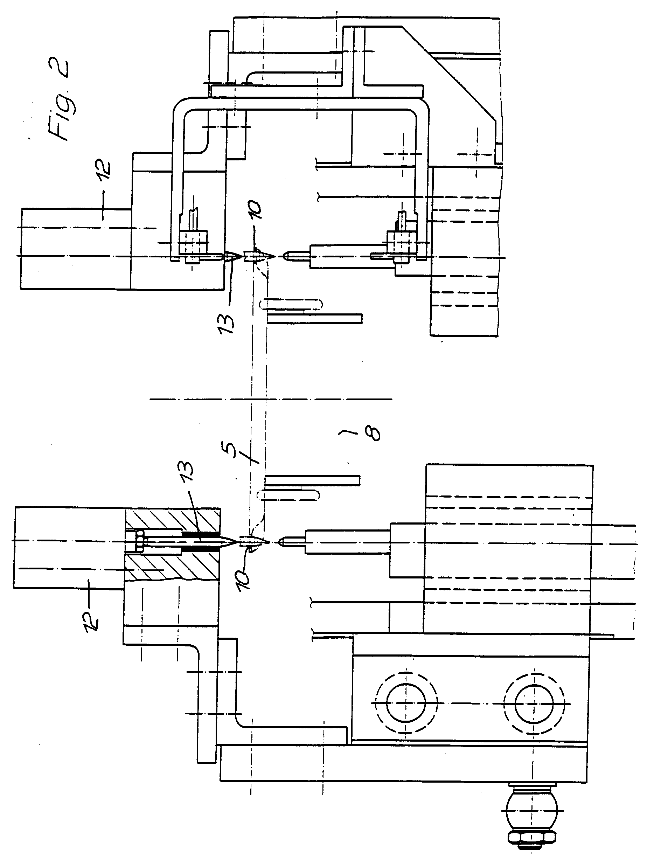

Mittels einer Fördervorrichtung 1 werden die Ordner 2 der Montagestelle 3 zugeführt. Quer zur Fördervorrichtung 1 ist eine Beschickungsanlage 4 für die Mechaniken 5 vorgesehen. Dabei werden die einzelnen Mechaniken 5 aus einem Magazin 6 einzeln zwischen die Klinken 7 einer Vorschubeinrichtung 8 eingesetzt. Die Mechaniken 5 sind, wie Fig. 2 erkennen läßt, mit zwei Befestigungsöffnungen 10 versehen. Um eine Vorpositionierung der Mechaniken 5 zu erreichen, ist vor der Montagestelle 3 eine Lichtschranke 9 vorgesehen, welche die Vorschubeinrichtung 8 steuert.

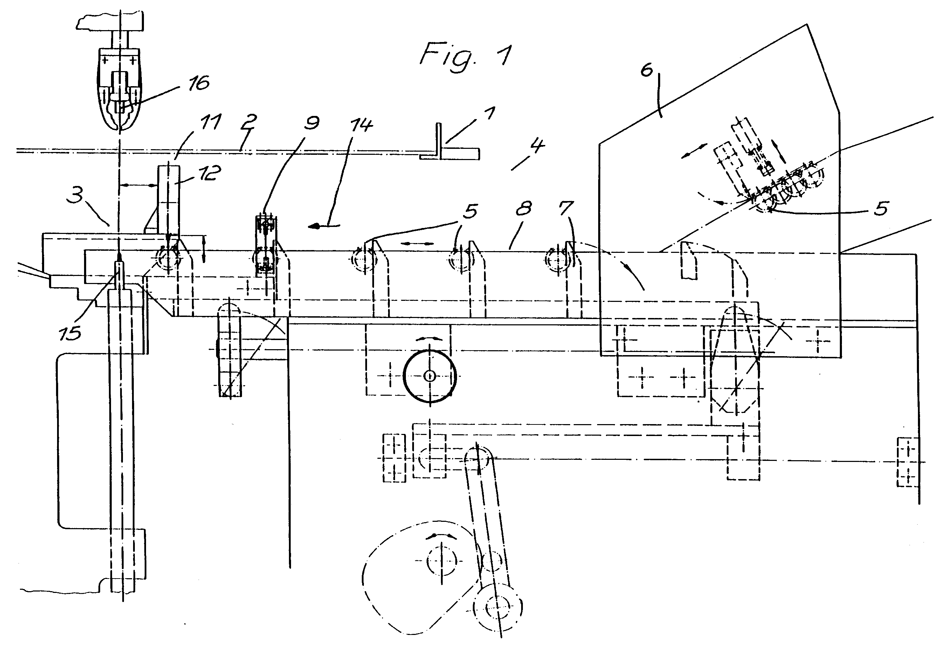

Die erfindungsgemäße Feinpositioniereinrichtung 11 besteht aus zwei in einer Hubvorrichtung 12 axial verschiebbaren konischen Stiften 13, welche in die Befestigungsöffnungen 10 der Mechaniken 5 eingeführt werden und damit eine einwandfreie Positionierung derselben herbeiführen. Die Hubvorrichtungen 12 sind in und gegen die Vorschubrichtung 14 der Mechaniken 5 längs verschiebbar gelagert und zwar von der Positionierlage, wie sie in Fig. 1 dargestellt ist, in die Montagelage 3. Sobald sich die Mechaniken 5 in der Montagelage 3 befinden, werden die Stifte 13 zurückgezogen und die Hubeinrichtungen 12 in die in Fig. 2 dargestellte Ausgangslage zurückgeschoben, so daß dann der Nietvorgang erfolgen kann, wozu unterhalb der Montagelage 3 ein Unterstempel 15 und oberhalb ein Nietstempel 16 vorgesehen sind.

Um die Feinpositioniervorrichtung 11 den verschieden breiten Mechaniken 5 anpassen zu können, sind sie quer zur Vorschubrichtung gegeneinander einstellbar verschiebbar angeordnet.

## Patentansprüche

1. Montageanlage, insbesondere Nietanlage, für mit mindestens einer Befestigungsöffnung (10) versehene Mechaniken (5) an Ordnern (2) für Briefe, Akten od. dgl., mit einer Vorschub- (8) und einer einen axial in die Befestigungsöffnung (10) einschiebbaren konischen Stift (13) aufweisenden Feinpositioniereinrichtung (11) für die Mechaniken (5), dadurch gekennzeichnet, daß der konische Stift (13) in einer in und gegen die Vorschubrichtung (14) von einer positionierlage (11) in eine Montagelage (3) längs verschiebbaren Hubvorrichtung (12) angeordnet ist.

2. Montageanlage nach Anspruch 1, gekennzeichnet durch die Anordnung einer Grobpositionierungsvorrichtung, insbesondere einer Lichtschranke (9).

3. Montageanlage für Mechaniken mit mindestens zwei Befestigungsöffnungen, nach einem der vorhergehenden Ansprüche, dadurch gekennzeichnet, daß zwei konische Stifte (13) vorgesehen sind, welche quer zur Vorschubrichtung (14) gegeneinander einstellbar verschiebbar sind.

## Claims

1. Assembly installation, in particular riveting installation, for mechanisms (5) provided with at least one fixing opening (10) for binders (2) for letters, files, or the like, having a feed device (8) and a fine positioning device (11), which has a conical pin (13) insertable axially into the fixing opening (10), for the mechanisms (5), characterised in that the conical pin (13) is arranged in a lifting device (12) which is longitudinally displaceable from a positioning position (11) into an assembly position (3) in and counter to the feed direction (14).

2. Assembly installation according to claim 1, characterised by the arrangement of a coarse positioning device, in particular a light barrier (9).

3. Assembly installation for mechanisms having at least two fixing openings according to either of the preceding claims, characterised in that two conical pins (13) are provided and are displaceable transversely to the feed direction (14) in an adjustable manner relative to one another.

## Revendications

1. Installation de montage, notamment installation de rivetage, pour des mécanismes (5), pourvus d'au moins une ouverture de fixation (10), sur des classeurs (2) de lettres, documents ou similaires, avec un dispositif d'avancement (8) et un dispositif de positionnement fin (11) pour les mécanismes (5) qui présente un axe conique (13) pouvant être enfilé axialement dans l'ouverture de fixation (10), **caractérisée** en ce que l'axe conique (13) est disposé dans un dispositif de levage (12) qui peut être déplacé longitudinalement, dans la direction d'avancement (14) et en direction contraire, d'une position de positionnement (11) dans une position de montage (3).

2. Installation de montage selon la revendication 1, **caractérisée** par la mise en place d'un dispositif de positionnement grossier, notamment d'un barrage photoélectrique (9).

3. Installation de montage pour des mécanismes pourvus d'au moins deux ouvertures de fixation, selon une des revendications précédentes, **caractérisée** en ce qu'il est prévu deux axes coniques (13), qui peuvent être déplacés aux fins de réglage l'un par rapport à l'autre transversalement à la direction d'avancement (14).
